# FASCICULE DE BREVET EUROPEEN

(11) **EP 2 794 350 B1**
(45) Date de publication et mention de la délivrance du brevet: **27.02.2019**
(21) Numéro de dépôt: 12816724.4
(22) Date de dépôt: 12.12.2012
(51) Int. Cl.: B60Q 1/26, B32B 17/10, F21V 29/00, E06B 7/00, B60J 1/00, F21V 8/00, B60Q 3/62, B60Q 3/208, F21W 107/00, F21Y 115/10, F21V 29/74, F21Y 101/00

(54) **VITRAGE ECLAIRANT POUR VEHICULE**
BELEUCHTUNGSFENSTER FÜR EIN FAHRZEUG
LIGHT-UP WINDOW FOR A VEHICLE

(30) Priorité: 19.12.2011 FR 1161885
(43) Date de publication de la demande: 29.10.2014
(73) Titulaire: Saint-Gobain Glass France, 92400 Courbevoie (FR)
(72) Inventeur: VERRAT-DEBAILLEUL, Adèle, F-60150 Villers-sur-Coudun (FR); BAUERLE, Pascal, F-80700 Roye (FR); LAURENCOT, Laeticia, F-60280 Margny Les Compiegne (FR); KLEO, Christophe, F-60350 Attichy (FR)
(74) Mandataire: Saint-Gobain Recherche
(86) Numéro de dépôt international: PCT/FR2012/052900
(87) Numéro de publication internationale: WO 2013/093301

(56) Documents cités:
- FR-A1- 2 937 710
- FR-A1- 2 937 711
- FR-A1- 2 955 530
- JP-A- 2004 271 734
- JP-A- 2006 169 861
- JP-A- 2007 067 076
- JP-A- 2008 275 920
- JP-A- 2010 009 845
- US-A1- 2008 284 308

## Description

La présente invention concerne un vitrage éclairant pour véhicules, en particulier un vitrage éclairant faisant partie du toit d'un véhicule automobile.

Il est connu d'incorporer des modules de diodes électroluminescentes (module LED) au niveau du bord de vitrages simples ou feuilletés, de façon à ce que la lumière émise par les LED entre par la tranche d'une feuille de verre et soit guidée par celle-ci jusqu'à un élément diffusant, appelé également moyen d'extraction de la lumière.

Ces vitrages éclairants ont essentiellement une fonction d'éclairage d'ambiance ou de signalisation lumineuse qui est obtenue avec des LED de faible puissance. Le rendement lumineux de tels vitrages éclairés par la tranche est généralement limité en raison des pertes de lumière par absorption de la lumière par le verre servant de guide d'onde et/ou les matériaux à proximité de celui-ci.

Comme il est généralement difficile voire impossible de réduire significativement les pertes de lumière par absorption, une autre possibilité pour arriver à des puissances lumineuses plus importantes serait d'utiliser des sources lumineuses plus puissantes.

Il est toutefois connu qu'une telle augmentation de la puissance des LED se traduit inévitablement par une augmentation de la chaleur dégagée par celles-ci. En effet, à rendement lumineux égal, cette quantité de chaleur est sensiblement proportionnelle à la puissance de la LED et à la consommation électrique du module. Cette chaleur, si elle n'est pas efficacement évacuée, conduit à une augmentation indésirable de la température du module LED qui se traduit presque systématiquement par une réduction de la durée de vie des LED et des autres composants électroniques du module.

Or, dans le domaine des vitrages éclairés par la tranche, l'évacuation de la chaleur générée par les modules LED en cours de fonctionnement s'avère très souvent difficile. En effet, en particulier dans le domaine des véhicules automobiles ou autres, il est souvent nécessaire de protéger les modules LED contre l'action de l'humidité omniprésente. Cette protection se fait couramment soit par encapsulation, c'est-à-dire surmoulage des modules LED avec un polymère organique, par exemple du polyuréthanne, injecté sous forme liquide puis durci, soit en logeant les modules LED, de façon démontable ou non, dans des boîtiers plus ou moins étanches.

Le problème de l'augmentation de la température de modules LED relativement puissants dans un environnement confiné, a été résolu dans la présente invention grâce à l'incorporation, au niveau du bord du vitrage, d'un élément dissipateur de chaleur. Cet élément est en contact de conduction thermique avec les modules LED et, grâce à une conductivité thermique élevée et une grande surface libre en contact avec l'atmosphère, permet d'évacuer la chaleur des modules LED et de prévenir efficacement une augmentation excessive de la température dans l'environnement direct des LED.

La présente invention a par conséquent pour objet un vitrage éclairant tel que défini dans la revendication 1.

Ce vitrage selon l'invention se distingue des vitrages à LED connus par le fait que le vitrage comprend en outre un élément dissipateur de chaleur qui est en contact de conduction thermique avec le module LED, en contact avec le moyen d'encapsulation et en contact avec l'atmosphère *via* une surface d'échange thermique (S).

Les modules LED sont choisis de préférence de manière à ce que l'énergie thermique dégagée par unité de longueur d'un module sous tension soit au moins égale à 1 W par décimètre, de préférence comprise entre 2 et 6 W/dm, en particulier entre 2,5 et 5 W/dm.

L'énergie thermique dégagée par les modules LED dépend non seulement de sa consommation électrique, exprimée en watts, mais également du rendement lumineux. En effet, pour une consommation électrique donnée, la chaleur dégagée est d'autant plus importante que le rendement lumineux est faible. Cela ne signifie toutefois nullement que l'on cherchera dans la présente invention à utiliser des modules LED à rendement lumineux faible qui dégagent une chaleur importante. La raison pour laquelle la présente invention est définie aussi à l'aide de ce paramètre réside simplement dans le fait qu'au-dessous d'une certaine valeur la chaleur générée par les modules ne conduit pas à une augmentation indésirable de la température et le problème technique du raccourcissement de la durée de vie des LED se pose moins ou ne se pose pas du tout.

L'homme du métier comprendra toutefois qu'il est difficile de définir un seuil précis pour cette valeur qui dépend, entre autres, de l'état de confinement des modules LED, de la résistance des LED à des températures élevées, ou encore des raccourcissements de la durée de vie des LED considérés comme acceptables.

Le vitrage éclairant de la présente invention est un vitrage feuilleté comportant deux feuilles de verres collées l'une contre l'autre au moyen d'un intercalaire de feuilletage.

Les vitrages de la présente invention comprennent donc de préférence, en plus de la première feuille, une deuxième feuille de verre transparente avec une première face principale, une deuxième face principale et une tranche, et un intercalaire de feuilletage transparent en contact adhésif avec la deuxième face principale de la première feuille de verre et la première face principale de la deuxième feuille de verre.

Dans la présente demande le terme « première feuille » désigne toujours la feuille éclairée par sa tranche et la deuxième feuille est généralement non éclairée. Le vitrage de l'invention est de préférence monté sur le véhicule de façon à ce que la première feuille est celle en contact avec l'habitacle du véhicule et la deuxième feuille celle située plus vers l'extérieur du véhicule, souvent en contact direct avec l'atmosphère extérieur du véhicule.

Le terme « première surface principale » désigne, aussi bien en relation avec la première qu'avec la deuxième feuille la face de la feuille tournée vers l'intérieur du véhicule. Logiquement, le terme « deuxième surface principale » désigne alors la surface de chaque feuille dirigée ou destinée à être dirigée vers l'extérieur du véhicule.

L'intercalaire de feuilletage utilisé dans les vitrages feuilletés peut être en n'importe quel matériau polymère transparent couramment utilisé à cette fin, par exemple en poly(vinyle butyral) (PVB), en polyuréthanne thermoplastique (TPU) ou en copolymère d'éthylène et d'acétate de vinyle (EVA).

La deuxième feuille est de préférence de taille plus importante que la première, dépassant ainsi cette dernière sur au moins une partie de son pourtour. Le système d'éclairage par la tranche comportant les modules LED, l'encapsulation et/ou l'élément dissipateur de chaleur s'appuie alors sur la première surface de la deuxième feuille, là où celle-ci dépasse la première feuille.

Il est en principe possible d'utiliser des modules LED dits « tropicalisés » c'est-à-dire recouverts d'une résine afin de les rendre moins sensibles ou insensibles à l'humidité atmosphérique mais une telle tropicalisation n'est pas indispensable car la fonction de protection des LED est assurée de préférence dans la présente invention conjointement par le moyen d'encapsulation et le dissipateur de chaleur. Autrement dit, l'élément dissipateur de chaleur coopère avec le moyen d'encapsulation de manière à enfermer les modules LED et de les isoler de l'atmosphère, et ceci de préférence de façon étanche à l'eau et de préférence également à l'air et à la vapeur d'eau.

Dans un mode de réalisation de la présente invention, le dissipateur comporte une partie en forme de plaque qui vient, à la manière d'un couvercle, fermer un espace délimité par le moyen d'encapsulation. Le moyen d'encapsulation a alors la forme d'un cordon ou d'un profilé entourant et délimitant une zone dans laquelle sont logés un ou plusieurs modules LED et l'élément dissipateur de chaleur coopère avec le moyen d'encapsulation de manière à couvrir le ou les modules LED et à fermer l'espace où ils sont logés.

Le moyen d'encapsulation peut être un élément préparé par moulage-injection ou bien peut être un cordon préformé, par exemple un cordon de colle ou d'élastomère, appliqué et fixé en bordure du vitrage, sur la première face principale de la première feuille et éventuellement aussi sur la première face principale de la deuxième feuille lorsque la géométrie en bordure du vitrage s'y prête.

Le dissipateur de chaleur ne joue toutefois pas forcément le rôle de couvercle de l'espace où sont logés les LED. Il peut être simplement une pièce en un matériau conducteur de chaleur, de forme plus ou moins complexe, qui est en contact de conduction thermique avec les modules LED. Le moyen d'encapsulation peut alors être fabriqué par surmoulage recouvrant au moins en partie les modules LED et la partie du dissipateur de chaleur en contact avec ceux-ci. Bien entendu, le moyen d'encapsulation doit laisser libre la surface d'échange thermique (S) de l'élément dissipateur de chaleur. Pour éviter que le moyen d'encapsulation, généralement opaque, ne vienne obstruer l'espace de couplage optique entre la face émettrice des LED et la tranche de la première feuille, il peut être nécessaire de combler cet espace avec une colle transparente.

La capacité du dissipateur de chaleur d'évacuer efficacement l'énergie thermique dégagée par les LED et les autres composants électroniques des modules LED, dépend
- de l'étendue et efficacité du contact avec les modules LED,
- de la conductivité thermique du matériau qui le constitue, et
- de la surface d'échange thermique, en contact avec l'atmosphère.

La conductivité thermique (λ) du dissipateur de chaleur utilisé dans la présente invention est de préférence au moins égale à 180 W/mK, en particulier au moins égale à 200 W/mK, et de manière particulièrement préférée au moins égale à 230 W/mK.

On choisira de préférence le matériau du dissipateur parmi les métaux ou alliages métalliques, l'aluminium et ses alliages étant particulièrement préférés car ils allient un faible coût, un faible poids et une conductivité thermique supérieure à 230 W/mK.

Le dissipateur de chaleur est en contact avec le ou les modules LED généralement *via* la PCB, support des LED. Bien entendu il est souhaitable de maximiser la surface de contact entre la PCB et le dissipateur de chaleur. Il peut être intéressant de coller ces deux éléments ensemble au moyen d'une colle thermique.

Enfin, la géométrie du dissipateur de chaleur est bien entendu déterminante pour son efficacité. Dans un mode de réalisation préféré, le dissipateur de chaleur comporte une pluralité d'ailettes en contact avec l'atmosphère, ces ailettes constituant au moins 50 %, de préférence au moins 60 % de la surface d'échange thermique (S) du dissipateur de chaleur.

Dans le mode de réalisation décrit ci-avant où le dissipateur a une partie en forme de plaque venant couvrir un espace contenant les LED, les ailettes sont situées de préférence sur la face de cette partie en forme de plaque opposée à celle qui fait face aux LED. Après recouvrement de l'espace contenant les LED par le dissipateur de chaleur, les ailettes se trouvent ainsi dirigées vers l'extérieur, en contact avec l'atmosphère extérieur du véhicule ou avec l'atmosphère de l'habitacle.

Dans un mode de réalisation préféré, l'élément dissipateur de chaleur présente une conductivité thermique et une surface d'échange thermique (S), en contact avec l'atmosphère, suffisante pour que l'augmentation de la température des LED en cours de fonctionnement soit au plus égale à environ 40 °C, de préférence au plus égale à environ 30 °C, en particulier au plus égale à environ 20 °C. Cette augmentation s'entend par rapport à la température des LED lorsque les modules LED sont hors tension.

Les LED peuvent être des LED à émission latérale (*side emitting LED*) ou à émission frontale (*top emitting LED*). Les LED à émission frontale constituent un mode de réalisation préféré. Ce type de LED est en effet disponible sur le marché sous les formes les plus diverses et à faible coût.

Le moyen d'extraction de la lumière peut être situé en principe sur l'une des deux faces principales de la première feuille de verre, sur l'une des deux faces de la deuxième feuille de verre éventuellement présente, ou encore située dans la masse de ces deux feuilles. Il peut s'agir d'un émail diffusant ou bien d'une encre diffusante appliquée par impression sur l'une des faces principales des feuilles de verre ou encore sur l'une des faces de l'intercalaire de feuilletage. Le revêtement diffusant peut être semi-opaque ou opaque.

Bien que toutes ces possibilités soient envisageables, certaines sont bien entendu préférées en vue de l'optimisation du rendement lumineux global du vitrage. Dans la perspective d'une telle optimisation, il est particulièrement préféré que le moyen de l'élément d'extraction de la lumière soit un revêtement diffusant essentiellement opaque, de préférence de couleur blanche, situé au niveau de la deuxième face principale de la première feuille. Ce mode de réalisation présente en effet l'avantage - par rapport à un revêtement semi-opaque sur la première face principale de la première feuille - de diffuser un maximum de lumière vers l'intérieur du véhicule et de réduire le plus possible la quantité de lumière perdue par diffusion vers l'extérieur.

Le vitrage selon l'invention a de préférence, lorsque toutes les LED qu'il contient sont allumées, une puissance lumineuse au moins égale 5 lumens, de préférence comprise entre 6 et 40 lumens et en particulier entre 7 et 30 lumens.

La présente invention a bien entendu également pour objet un véhicule, de préférence un véhicule automobile, comportant un vitrage éclairant tel que décrit ci-avant. Ce vitrage éclairant peut être un vitrage latéral, mais fait de préférence partie du toit du véhicule.

La présente invention est à présent illustrée à l'aide de certains modes de réalisation représentés sur les dessins annexés dans lesquelles

La figure 1 montre, en section transversale, le bord d'un vitrage feuilleté où l'élément dissipateur de chaleur vient recouvrir un espace contenant les LED.

La figure 2 montre, en section transversale, un autre mode de réalisation d'un vitrage feuilleté selon l'invention où le dissipateur ne recouvre pas un espace contenant les LED mais est partiellement encapsulé.

La figure 3 montre, en section transversale, un troisième mode de réalisation d'un vitrage feuilleté selon l'invention où l'encapsulation est présent sous forme de deux cordons de colle fixant le dissipateur aux feuilles de verre.

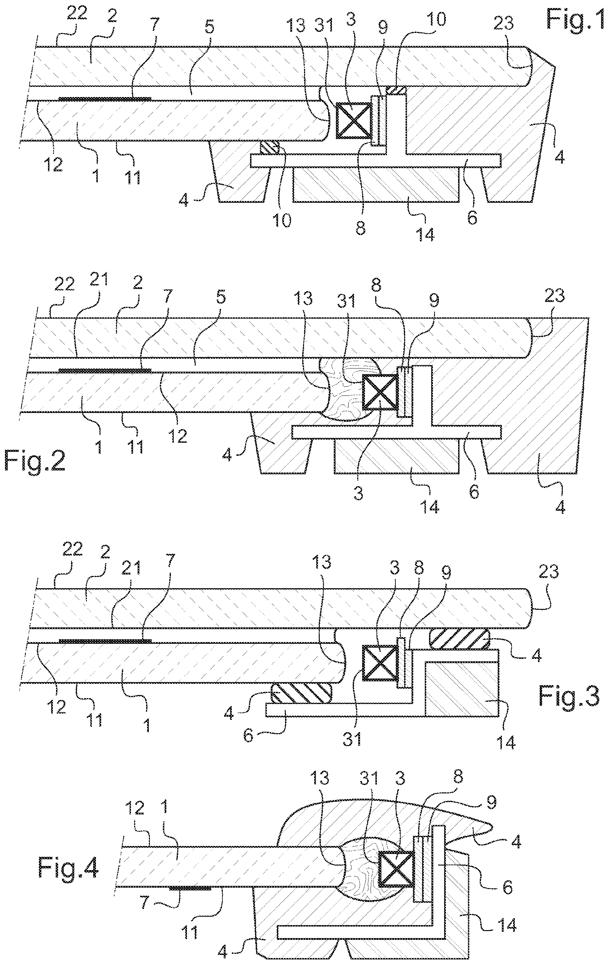

Enfin, la figure 4 montre un quatrième mode de réalisation d'un vitrage simple qui n'est pas selon l'invention.

Plus particulièrement, a figure 1 représente le bord d'un vitrage feuilleté avec une première feuille de verre 1, une deuxième feuille de verre 2, un intercalaire de feuilletage 5, en contact adhésif avec la deuxième face principale 12 de la première feuille de verre 1 et la première face principale 21 de la deuxième feuille de verre 2. La première face principale 11 de la première feuille 1 est en contact avec l'intérieur du véhicule et la deuxième face principale 22 de la deuxième feuille de verre 2 est dirigée vers l'extérieur du véhicule.

La deuxième feuille de verre est plus grande que la première feuille de verre et sert d'appui à une partie de l'élément d'encapsulation 4 et au dissipateur de chaleur 6. Le module LED 8 avec une LED 3 à émission frontale est positionné de façon à ce que la face émettrice 31 de la LED 3 soit en regard de la tranche 13 de la première feuille de verre 1. La tranche 23 de la deuxième feuille de verre est couverte par le moyen d'encapsulation 4.

La lumière injectée par la LED au niveau de la tranche 13 de la première feuille est guidée par celle-ci jusqu'à l'élément d'extraction de la lumière 7, un émail diffusant opaque de couleur claire situé au niveau de la deuxième face principale de la première feuille.

L'élément dissipateur de chaleur 6 a globalement une section transversale en forme de T renversé. La partie verticale sert de support au module LED 8. Le contact de conduction thermique entre le module LED 8 et l'élément dissipateur de chaleur 6 est assuré au moyen d'une couche de colle thermique 9. La partie horizontale du dissipateur recouvre l'espace entre les deux parties du moyen d'encapsulation 4.

Le dissipateur de chaleur 6 est fixé à la première surface principale de la première et de la deuxième feuille de verre par deux cordons de colle 10. Ces cordons permettent de positionner le dissipateur de chaleur 6 en vue de l'injection-moulage du moyen d'encapsulation 4. Dans ce mode de réalisation le couplage optique entre la tranche 13 et la face émettrice 31 de la LED se fait simplement par l'air emprisonné entre le dissipateur de chaleur et les feuille de verre. Le dissipateur de chaleur comporte une série d'ailettes 14 dont une seule est visible sur la figure 1. Ces ailettes ne sont pas couvertes par le matériau d'encapsulation. Elles constituent l'essentiel de la surface d'échange thermique du dissipateur de chaleur.

La figure 2 montre un mode de réalisation d'un vitrage de l'invention qui diffère de celui de la figure 1 essentiellement par le fait que le couplage optique entre la face émettrice 31 de la LED 3 est assuré par une colle transparente 15. L'élément dissipateur de chaleur 6 en forme de T renversé ne couvre ici pas un espace contenant les LED, mais l'encapsulation 4 fixe et enferme partiellement le dissipateur 6 portant la LED 3. Bien entendu, les ailettes 14 constituant la surface d'échange thermique du dissipateur ne sont pas encapsulées mais restent libre et en contact avec l'atmosphère.

Dans la figure 3, l'élément dissipateur de chaleur 6 portant le module de LED 8 formé de la LED 3 et du support PCB, a une section transversale en forme de marche d'escalier. Ce dissipateur est fixé à la première feuille 1 et deuxième feuille 2 par le moyen d'encapsulation 4 qui a ici la forme de deux cordons de colle. Le couplage optique entre la face émettrice 31 de la LED 3 et la tranche 13 se fait par l'air.

Enfin, la figure 4 montre un exemple d'un simple vitrage qui n'est pas selon l'invention.

Le dissipateur de chaleur 6 en forme de profilé avec une section transversale en L porte le module LED 8 fixé au moyen d'une colle thermique 9. Le couplage optique entre la LED et la feuille de verre est assuré par un cordon de colle transparente 15 qui empêche le moyen d'encapsulation 4 d'envahir l'espace entre la face émettrice 31 de la LED et la tranche 13 de la feuille de verre 1. Comme pour tous les autres modes de réalisation décrits ci-avant, le moyen d'encapsulation laisse parfaitement libre la surface des ailettes 14 de l'élément dissipateur de chaleur 6.

## Revendications

1. Vitrage éclairant pour véhicule, comprenant
- une première feuille de verre (1) transparente avec une première face principale (11), une deuxième face principale (12) et une tranche (13),
- une deuxième feuille de verre (2) transparente avec une première face principale (21), une deuxième face principale (22) et une tranche (23),
- un intercalaire de feuilletage (5) transparent en contact adhésif avec la deuxième face principale (12) de la première feuille et la première face principale (21) de la deuxième feuille de verre,
- un ou plusieurs modules de diodes électroluminescentes (modules LED) (8) comportant chacun une pluralité de diodes électroluminescentes (LED) (3) et des composants électroniques associés fixés sur une carte à circuits imprimés (PCB), les modules étant positionnés de manière à ce que la face émettrice (31) des LED soit en regard de la tranche (13) de la première feuille de verre,
- un moyen d'encapsulation (4) en contact avec la première face principale (11) de la première feuille,
- un élément d'extraction de la lumière (7), situé de préférence sur l'une des faces principales de la première feuille de verre,
**caractérisé par le fait qu'**il comprend en outre un élément dissipateur de chaleur (6), qui est en contact de conduction thermique avec le module LED, en contact avec le moyen d'encapsulation (4) et en contact avec l'atmosphère *via* une surface d'échange thermique (S).

2. Vitrage éclairant selon la revendication 1, **caractérisé par le fait que** l'énergie thermique dégagée par le ou les modules LED, sous tension, est au moins égale à 1 W par décimètre, de préférence comprise entre 2 et 6 W/dm, en particulier entre 2,5 et 5 W/dm.

3. Vitrage éclairant selon l'une quelconque des revendications précédentes, **caractérisé par le fait que** l'élément dissipateur de chaleur (6) coopère avec le moyen d'encapsulation (4) de manière à enfermer les LED et les isoler de l'atmosphère.

4. Vitrage éclairant selon l'une quelconque des revendications précédentes, **caractérisé par le fait que** le moyen d'encapsulation (4) a la forme d'un cordon ou d'un profilé entourant et délimitant une zone dans laquelle sont logés un ou plusieurs modules LED, l'élément dissipateur de chaleur (6) coopérant avec le moyen d'encapsulation de manière à couvrir le ou les modules LED et à fermer l'espace où sont logés le ou les modules LED.

5. Vitrage éclairant selon l'une quelconque des revendications précédentes, **caractérisé par le fait que** l'élément dissipateur de chaleur (6) coopère avec le moyen d'encapsulation (4) de manière à isoler de façon étanche le ou les modules LED de l'atmosphère.

6. Vitrage éclairant selon l'une quelconque des revendications précédentes, **caractérisé par le fait que** le dissipateur de chaleur (6) comporte une pluralité d'ailettes en contact avec l'atmosphère, ces ailettes constituant au moins 50 %, de préférence au moins 60 % de la surface d'échange thermique (S) de l'élément dissipateur de chaleur.

7. Vitrage éclairant selon l'une quelconque des revendications précédentes, **caractérisé par le fait qu'**il présente une conductivité thermique (λ) au moins égale à 180 W/mK, de préférence au moins égale à 200 W/mK, en particulier au moins égale à 230 W/mK.

8. Vitrage éclairant selon l'une quelconque des revendications précédentes, **caractérisé par le fait que** l'élément dissipateur de chaleur présente une conductivité thermique et une surface d'échange thermique (S), en contact avec l'atmosphère, suffisante pour que l'augmentation de la température des LED en cours de fonctionnement soit au plus égale à 40 °C, de préférence au plus égale à 30 °C, en particulier au plus égale à 20 °C.

9. Vitrage éclairant selon l'une quelconque des revendications précédentes, **caractérisé par le fait que** l'élément d'extraction de la lumière (7) est un revêtement diffusant opaque, de préférence de couleur blanche, situé au niveau de la deuxième face principale de la première feuille.

10. Vitrage éclairant selon l'une quelconque des revendications précédentes, **caractérisé par le fait que** les LED sont des LED à émission frontale.

11. Vitrage éclairant selon l'une quelconque des revendications précédentes, **caractérisé par le fait qu'**il émet, lorsqu'il est allumé, une puissance lumineuse au moins égale 5 lumens, de préférence comprise entre 6 et 40 lumens et en particulier entre 7 et 30 lumens

12. Véhicule, de préférence véhicule automobile, comportant un vitrage éclairant selon l'une quelconque des revendications précédentes.

13. Véhicule selon la revendication précédente, **caractérisé par le fait que** le vitrage éclairant fait partie du toit du véhicule.

## Patentansprüche

1. Beleuchtende Verglasung für ein Fahrzeug, umfassend
- eine erste transparente Glasscheibe (1) mit einer ersten Hauptseite (11), einer zweiten Hauptseite (12) und einer Kante (13),
- eine zweite transparente Glasscheibe (2) mit einer ersten Hauptseite (21), einer zweiten Hauptseite (22) und einer Kante (23),
- eine transparente Verbundzwischenlage (5) in Haftkontakt mit der zweiten Hauptseite (12) der ersten Scheibe und der ersten Hauptseite (21) der zweiten Glasscheibe,
- ein oder mehrere Leuchtdiodenmodule (LED-Module) (8), die jeweils eine Vielzahl von Leuchtdioden (LEDs) (3) und zugehörige, auf einer Leiterplatte (PCB) befestigte elektronische Bauelemente umfassen, wobei die Module so angeordnet sind, dass die emittierende Seite (31) der LEDs der Kante (13) der ersten Glasscheibe zugewandt ist,
- ein Einkapselungsmittel (4) in Kontakt mit der ersten Hauptseite (11) der ersten Scheibe,
- ein Lichtausleitungselement (7), das bevorzugt auf einer der Hauptseiten der ersten Glasscheibe angeordnet ist,
**dadurch gekennzeichnet, dass** sie ferner ein wärmeabführendes Element (6) umfasst, das in thermisch leitendem Kontakt mit dem LED-Modul, in Kontakt mit dem Einkapselungsmittel (4) und über eine Wärmetauschfläche (S) in Kontakt mit der Atmosphäre ist.

2. Beleuchtende Verglasung nach Anspruch 1, **dadurch gekennzeichnet, dass** die von dem oder den LED-Modulen unter Spannung abgegebene Wärmeenergie mindestens 1 W je Dezimeter, bevorzugt zwischen 2 und 6 W/dm, insbesondere zwischen 2,5 und 5 W/dm, beträgt.

3. Beleuchtende Verglasung nach einem der vorhergehenden Ansprüche, **dadurch gekennzeichnet, dass** das wärmeabführende Element (6) mit dem Einkapselungsmittel (4) so zusammenwirkt, dass es die LEDs umschließt und sie von der Atmosphäre isoliert.

4. Beleuchtende Verglasung nach einem der vorhergehenden Ansprüche, **dadurch gekennzeichnet, dass** das Einkapselungsmittel (4) die Form einer Schnur oder eines Profils hat, die bzw. das einen Bereich umgibt und abgrenzt, in dem ein oder mehrere LED-Module untergebracht sind, wobei das wärmeabführende Element (6) mit dem Einkapselungsmittel so zusammenwirkt, dass es das oder die LED-Module bedeckt und den Raum, in dem das oder die LED-Module untergebracht sind, verschließt.

5. Beleuchtende Verglasung nach einem der vorhergehenden Ansprüche, **dadurch gekennzeichnet, dass** das wärmeabführende Element (6) mit dem Einkapselungsmittel (4) so zusammenwirkt, dass es das oder die LED-Module dicht von der Atmosphäre isoliert.

6. Beleuchtende Verglasung nach einem der vorhergehenden Ansprüche, **dadurch gekennzeichnet, dass** der Wärmeabführer (6) eine Vielzahl von Rippen umfasst, die in Kontakt mit der Atmosphäre sind, wobei diese Rippen mindestens 50 %, bevorzugt mindestens 60 %, der Wärmetauschfläche (S) des wärmeabführenden Elements ausmachen.

7. Beleuchtende Verglasung nach einem der vorhergehenden Ansprüche, **dadurch gekennzeichnet, dass** sie Wärmeleitfähigkeit (λ) von mindestens gleich 180 W/mK, bevorzugt von mindestens gleich 200 W/mK, insbesondere von mindestens gleich 230 W/mK, aufweist.

8. Beleuchtende Verglasung nach einem der vorhergehenden Ansprüche, **dadurch gekennzeichnet, dass** das wärmeabführende Element eine Wärmeleitfähigkeit und eine Wärmetauschfläche (S) in Kontakt mit der Atmosphäre aufweist, die ausreicht, damit der Temperaturanstieg der LEDs während des Betriebs höchstens gleich 40°C, bevorzugt höchstens gleich 30°C, insbesondere höchstens gleich 20°C, beträgt.

9. Beleuchtende Verglasung nach einem der vorhergehenden Ansprüche, **dadurch gekennzeichnet, dass** das Lichtausieitungselement (7) eine undurchsichtige streuende Beschichtung von bevorzugt weißer Farbe ist, die sich im Bereich der zweiten Hauptseite der ersten Scheibe befindet.

10. Beleuchtende Verglasung nach einem der vorhergehenden Ansprüche, **dadurch gekennzeichnet, dass** die LEDs flächenemittierende LEDs sind.

11. Beleuchtende Verglasung nach einem der vorhergehenden Ansprüche, **dadurch gekennzeichnet, dass** sie, wenn sie eingeschaltet ist, eine Lichtleistung von mindestens gleich 5 Lumen, bevorzugt zwischen 6 und 40 Lumen und insbesondere zwischen 7 und 30 Lumen, emittiert.

12. Fahrzeug, bevorzugt Kraftfahrzeug, mit einer beleuchtenden Verglasung nach einem der vorhergehenden Ansprüche.

13. Fahrzeug nach dem vorhergehenden Anspruch, **dadurch gekennzeichnet, dass** die beleuchtende Verglasung Teil des Dachs des Fahrzeugs ist.

## Claims

1. An illuminating glazing unit for vehicles, comprising
- a first transparent sheet of glass (1) with a first main face (11), a second main face (12) and an edge (13),
- a second transparent sheet (2) of glass with a first main face (21), a second main face (22) and an edge (23),
- a transparent lamination interlayer (5) which is in adhesive contact with the second main face (12) of the first sheet and the first main face (21) of the second sheet of glass,
- one or more modules containing light-emitting diodes (LED modules) (8), each having a plurality of light-emitting diodes (LEDs) (3) and associated electronic components fixed to a printed circuit board (PCB), the modules being positioned in such a way that the emitting faces (31) of the LEDs are turned toward the edge (13) of the first sheet of glass,
- an encapsulation means (4) in contact with the first main face (11) of the first sheet, and
- a light extraction element (7), preferably located on one of the main faces of the first sheet of glass,
**characterized in that** it further comprises a heat sink element (6), which is in thermal conduction contact with the LED module, and is in contact with the encapsulation means (4) and in contact with the atmosphere via a heat exchange surface (S).

2. The illuminating glazing unit as claimed in claim 1, **characterized in that** the thermal energy given off by the LED modules, when they are switched on, is at least equal to 1 W per decimeter, preferably in the range from 2 to 6 W/dm, and particularly from 2.5 to 5 W/dm.

3. The illuminating glazing unit as claimed in any one of the preceding claims, **characterized in that** the heat sink element (6) interacts with the encapsulation means (4) so as to enclose the LEDs and isolate them from the atmosphere.

4. The illuminating glazing unit as claimed in any one of the preceding claims, **characterized in that** the encapsulation means (4) takes the form of a bead or a profiled element surrounding and delimiting an area in which one or more LED modules are housed, the heat sink element (6) interacting with the encapsulation means so as to cover the LED module or modules and close the space in which the LED module or modules are housed.

5. The illuminating glazing unit as claimed in any one of the preceding claims, **characterized in that** the heat sink element (6) interacts with the encapsulation means (4) so as to isolate the LED module or modules from the atmosphere in an airtight way.

6. The illuminating glazing unit as claimed in any one of the preceding claims, **characterized in that** the heat sink (6) has a plurality of fins in contact with the atmosphere, these fins constituting at least 50%, or preferably at least 60%, of the heat exchange surface (S) of the heat sink.

7. The illuminating glazing unit as claimed in any one of the preceding claims, **characterized in that** it has a thermal conductivity (λ) equal to at least 180 W/mK, preferably equal to at least 200 W/mK, and in particular equal to at least 230 W/mK.

8. The illuminating glazing unit as claimed in any one of the preceding claims, **characterized in that** the heat sink element has sufficient thermal conductivity and a sufficient heat exchange surface (S) in contact with the atmosphere to ensure that the temperature increase of the LEDs during operation is not more than 40°C, preferably not more than 30°C, and particularly not more than 20°C.

9. The illuminating glazing unit as claimed in any one of the preceding claims, **characterized in that** the light extraction element (7) is an opaque diffusing coating, preferably white in color, located on the second main face of the first sheet.

10. The illuminating glazing unit as claimed in any one of the preceding claims, **characterized in that** the LEDs are top emitting LEDs.

11. The illuminating glazing unit as claimed in any one of the preceding claims, **characterized in that** it emits, when lit, an illuminating power of at least 5 lumens, preferably in the range from 6 to 40 lumens, and particularly from 7 to 30 lumens.

12. A vehicle, preferably a motor vehicle, having an illuminating glazing unit as claimed in any one of the preceding claims.

13. The vehicle as claimed in the preceding claim, **characterized in that** the illuminating glazing unit forms part of the roof of the vehicle.
